# EUROPÄISCHE PATENTSCHRIFT

(11) **EP 0 533 052 B1**
(45) Veröffentlichungstag und Bekanntmachung des Hinweises auf die Patenterteilung: **19.04.1995**
(21) Anmeldenummer: 92115479.5
(22) Anmeldetag: 10.09.1992
(51) Int. Cl.: B60S 1/08, H01H 11/06

(54) **Elektrischer Schalter, insbesondere Parkstellungsschalter für einen Scheibenwischermotor**
Electric switch, notably a parking position switch for a windscreen wiper motor
Commutateur électrique, notamment commutateur d'arrêt en fin de course de moteur d'essuie-glace

(30) Priorität: 18.09.1991 DE 4130972
(43) Veröffentlichungstag der Anmeldung: 24.03.1993
(73) Patentinhaber: ITT Automotive Europe GmbH, 60488 Frankfurt (DE)
(72) Erfinder: Walther, Bernd, W-7120 Bietigheim-Bissingen (DE)
(74) Vertreter: Hebing, Norbert

(56) Entgegenhaltungen:
- DE-A- 3 818 563

## Beschreibung

Die Erfindung betrifft einen elektrischen Schalter, der insbesondere als Parkstellungsschalter für einen Scheibenwischermotor verwendet wird und der die Merkmale aus dem Oberbegriff des Anspruchs 1 aufweist.

Bei den heute in der Praxis verwendeten Elektromotoren zum Antrieb von Scheibenwischern an Kraftfahrzeugen wird die Drehzahl der Motorwelle meist über eine Schnecke und ein Schneckenrad auf eine kleinere Drehzahl herabgesetzt. In dem Elektromotor ist außerdem ein Parkstellungsschalter untergebracht, der dafür sorgt, daß der Elektromotor auch nach dem Ausschalten eines Betriebsschalters noch so lange mit Strom versorgt wird, bis die Scheibenwischer eine Parkstellung erreicht haben.

Die DE-A-30 22 442 zeigt einen Elektromotor zum Antrieb von Scheibenwischern, dessen Parkstellungsschalter ein elektrisch leitendes Metallblech und mehrere gehäusefeste Schleifkontakte aufweist. In der Praxis ist das in der genannten Schrift gezeigte Metallblech meist auf dem Schneckenrad befestigt, das üblicherweise aus Kunststoff hergestellt ist und einen Träger für das Metallblech bildet. Es sind jedoch auch Ausführungen bekannt, bei denen zwar das Schneckenrad drehfest mit der Abtriebswelle verbunden ist, das Metallblech des Parkstellungsschalters sich jedoch auf einem Rad einer zusätzlichen, dem Schneckenrad nachgeordneten Untersetzungsstufe befindet. Dadurch kann erreicht werden, daß die Scheibenwischer nach dem Abschalten des Elektromotors mit dem Betriebschalter noch mehrere Wischzyklen durchlaufen.

Das in der DE-A-30 22 442 gezeigte Metallblech erstreckt sich über drei konzentrisch zueinander liegende Kontaktbahnen, auf denen drei Schleifkontakte entlangschleifen, wenn sich das Metallblech dreht. Dieses besteht aus einem geschlossenen Ring, aus einem davon nach innen weisenden Ringsektor und einem zweiten sich außen an den geschlossenen Ring anschließenden offenen Ring, dessen Lücke dem Ringsektor gegenüberliegt und einen größeren Winkelbereich umfaßt als der Ringsektor. Wenn der Elektromotor in der Parkstellung der Scheibenwischer stillsteht, liegt der eine Schleifkontakt in der Lücke des offenen Rings auf dem Material des Schneckenrades auf.

Aus der DE-A-38 18 563 ist es bekannt, in die Lücke des offenen Rings ein weiteres Blech zu legen, das jedoch keine elektrische Funktion hat. In der Parkstellung liegt ein Schleifkontakt auf diesem zusätzlichen Blech auf. Um dahin zu kommen muß er jedoch, wenn auch nur einen kurzen Weg, über Material des Schneckenrades bewegt werden.

Auf einer Kontaktbahn, auf der Übergänge eines Schleifkontakts von einem Metallblech auf das Material des Trägers vorhanden sind und wie sie gemäß dem Oberbegriff des Anspruchs 1 ebenfalls in der DE-A-38 18 563 gezeigt sind, sollten im Bereich des Übergangs die von dem Schleifkontakt beaufschlagbare Fläche des Metallblechs und die von dem Schleifkontakt beaufschlagbare Fläche des Trägers wenigstens annähernd auf gleicher Höhe liegen, damit der Schleifkontakt nicht hakt und beschädigt wird und damit keine übermäßig lauten Geräusche entstehen. Die gleiche Problematik wie bei einem Parkstellungsschalter in einem Scheibenwischermotor tritt auch bei elektrischen Schaltern auf, die von Hand betätigt werden oder bei denen das Metallblech eine ganz andere Form, z. B. eine längliche und schmale Form hat.

Der Erfindung liegt die Aufgabe zugrunde, einen elektrischen Schalter mit den Merkmalen aus dem Oberbegriff des Anspruchs 1 so auszubilden, daß die Gefahr einer Beschädigung eines Schleifkontakts verringert wird und Geräusche vermindert werden.

Diese Aufgabe wird erfindungsgemäß durch einen elektrischen Schalter gelöst, der die Merkmale aus dem Oberbegriff des Anspruchs 1 aufweist und bei dem zusätzlich das Metallblech angrenzend an die beaufschlagbare Fläche des Trägers einen Abschnitt aufweist, der auf den Träger zu vorgespannt ist.

Auf diese Weise kann man vermeiden, daß das Metallblech aufgrund irgendwelcher Unebenheiten der Auflagefläche am Träger im Bereich des Übergangs über den Träger hochsteht. Umgekehrt braucht jedoch das Metallblech auch nicht tiefer als das angrenzende Material des Trägers zu liegen, obwohl dies weniger kritisch ist, da der Schleifkontakt das weichere Material des Trägers im Betrieb bald etwas abgeschabt haben wird. Vielmehr wird man jetzt die Höhe des Absatzes im Material des Trägers und im Übergangsbereich zwischen Metall und Kunststoff auf die Dicke des Metallblechs abstimmen. Ein federnd vorgespannter Abschnitt liegt wegen seiner Vorspannung auf dem Boden des Trägers auf und steht nicht mehr über das Kunststoffmaterial vor.

Grundsätzlich ist es möglich, die Vorspannung eines Abschnitts des Metallblechs dadurch zu erhalten, daß die Auflagefläche des Trägers im Bereich des Abschnitts ein höheres Niveau als im übrigen Bereich des Blechs besitzt. Dann wird der vorgespannte Abschnitt nach der Montage des Metallblechs auf dem Träger etwas nach oben gebogen sein. Im entspannten Zustand kann das Metallblech einschließlich des federnden Abschnitts eben sein. Bevorzugt wird jedoch eine Lösung gemäß Anspruch 2, nach der ein federnd vorgespannter Abschnitt im entspannten Zustand aus der Ebene des Metallblechs abgebogen ist. Die Auflagefläche für das Metallblech am Träger kann dann eben sein.

Vorteilerhafte weitere Ausgestaltungen eines erfindungsgemäßen elektrischen Schalters sind den Unteransprüchen 3 bis 10 zu entnehmen.

Ist das Metallblech, quer zur Richtung der relativen Bewegung zwischen ihm und dem Schleifkontakt betrachtet, breiter als der vorgespannte Abschnitt, so ist ein einfaches Abbiegen des Abschnitts dadurch möglich, daß er seitlich durch eine Freisparung vom übrigen Metallblech getrennt ist.

Auch wenn die relative Bewegung zwischen Träger und Schleifkontakt eine Drehbewegung in nur eine einzige Richtung ist, wobei sich in der Schleifbahn des Schleifkontakts eine Blechrücke befindet, ist es vorteilhaft, wenn sich gemäß Anspruch 6 beidseits der Blechlücke jeweils ein vorgespannter Abschnitt des Metallblechs befindet.

Wie eingangs beschrieben, weist das Metallblech eines Parkstellungsschalters in einem Wischermotor üblicherweise eine lange Kontaktbahn für einen Schleifkontakt und eine kurze Kontaktbahn für einen Schleifkontakt auf. Gemäß Anspruch 7 ist nun ein vorgespannter Abschnitt an der langen Kontaktbahn länger als ein vorgespannter Abschnitt an der kurzen Kontaktbahn. Der Vorspannweg ist jedoch gemäß Anspruch 8 vorteilhafterweise bei dem langen vorgespannten Abschnitt und bei dem kurzen vorgespannten Abschnitt gleich. Er beträgt zweckmäßigerweise etwa 0,2 mm.

Der Anspruch 11 bezieht sich auf einen Scheibenwischermotor mit einem elektrischen Schalter nach einem der Ansprüche 1 bis 10.

Die Erfindung wird nun anhand der Zeichnungen näher erläutert.

Es zeigen
- Fig. 1: eine Schaltanordnung mit einem zum Antrieb von Scheibenwischern an Kraftfahrzeugen verwendeten Elektromotor mit einem Parkstellungsschalter,
- Fig. 2: eine Ansicht auf die Stirnseite eines Schneckenrades mit einem darauf befestigten, zu einem Parkstellungsschalter gehörenden Metallblech,
- Fig. 3: einen Schnitt entlang der Linie III/III aus Figur 2 und
- Fig. 4: einen Schnitt ähnlich dem aus Fig. 3, jedoch bei nicht aufgesetztem Metallblech.

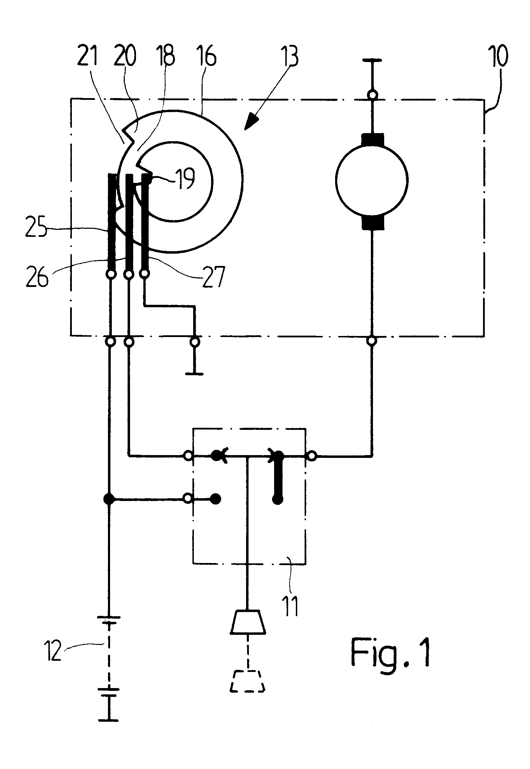

Zu der Schaltanordnung gemäß Fig. 1 gehört ein Elektromotor 10, ein Betriebsschalter 11, eine Spannungsquelle 12 und mehrere elektrische Leitungen, die Elektromotor, Betriebsschalter und Spannungsquelle miteinander verbinden. Ein elektrisch leitendes Metallblech bildet eine Schaltscheibe 16, die auf einem in Figur 1 nicht näher dargestellten Schneckenrad befestigt ist, das mit einer auf einer verlängerten Motorwelle ausgebildeten Schnecke kämmt. Die Schaltscheibe 16 weist einen geschlossenen Ring 18, einen von diesem Ring zum Zentrum der Scheibe 16 zeigenden Ringsektor 19, der sich über einen Winkelbereich von etwa 30° streckt, und einen sich nach außen an den geschlossenen Ring 18 anschließenden offenen Ring 20 auf, dessen Lücke 21 die Form eines sich über einen Winkelbereich von etwa 60° erstreckenden Ringsektors hat und den Ringsektor 19 gegenüberliegt.

Mit der Schaltscheibe 16 wirken drei Schleifkontakte 25, 26 und 27 zusammen. Der Schleifkontakt 25 schleift auf dem offenen Ring 20 und der Lücke 21, der Schleifkontakt 26 auf dem geschlossenen Ring 18 und der Schleifkontakt 27 auf dem Ringsektor 19 und dem sich daran in peripherer Richtung anschließenden Kunststoffmaterial des Schneckenrads. Das Schneckenrad als Träger der Schaltscheibe 16, die Schaltscheibe 16 selbst sowie die drei Schleifkontakte 25, 26 und 27 bilden einen Parkstellungsschalter 13 für den Elektromotor 10, mit dem ein oder mehrere Scheibenwischer eines Kraftfahrzeugs angetrieben werden.

Bei dem erfindungsgemäßen Parkstellungsschalter 13 ist nun dafür gesorgt, daß die Übergänge zwischen dem Ringsektor 19 bzw. dem offenen Ring 20 und dem angrenzenden Material weitgehend eben sind, so daß die Schleifkontakte 25 und 27 nicht haken und nicht beschädigt werden. Um diese ebenen Übergänge zu erhalten, weist der offene Ring 20 an seinen der Lücke 21 zugekehrten Enden jeweils einen Abschnitt 29 auf, der durch eine Freisparung 30, die in peripherer Richtung verläuft, von der übrigen Schaltscheibe 16 getrennt ist. Die innere Begrenzung einer Freisparung 30 wird dadurch gebildet, daß die der Lücke 21 zugekehrte, kreisförmig gekrümmte Seitenkante 31 des geschlossenen Rings 18 mit ihrer kreisförmigen Krümmung in einem gleichmäßigen Verlauf und stufenlos über die Lücke 21 hinaus bis zum Ende einer Freisparung 30 verlängert ist. Die andere peripher verlaufende Begrenzung einer Freisparung 30 befindet sich radial weiter außen.

Ebenso wie am offenen Ring 20 sind auch an dem Ringsektor 19 endseitige Abschnitte 32 vorhanden, die jeweils durch eine Freisparung 33 von dem geschlossenen Ring 18 getrennt sind. Diesmal ist die innere Seitenkante 34 des mittleren Rings mit ihrer kreisförmigen Krümmung stufenlos bis zum Ende einer Freisparung 33 fortgeführt. Die andere peripher verlaufende Begrenzung einer Freisparung 33 befindet sich radial weiter innen. Weil der Ringsektor 19 in peripherer Richtung nur kurz ist, sind die Freisparungen 33 wesentlich kürzer als die Freisparungen 30.

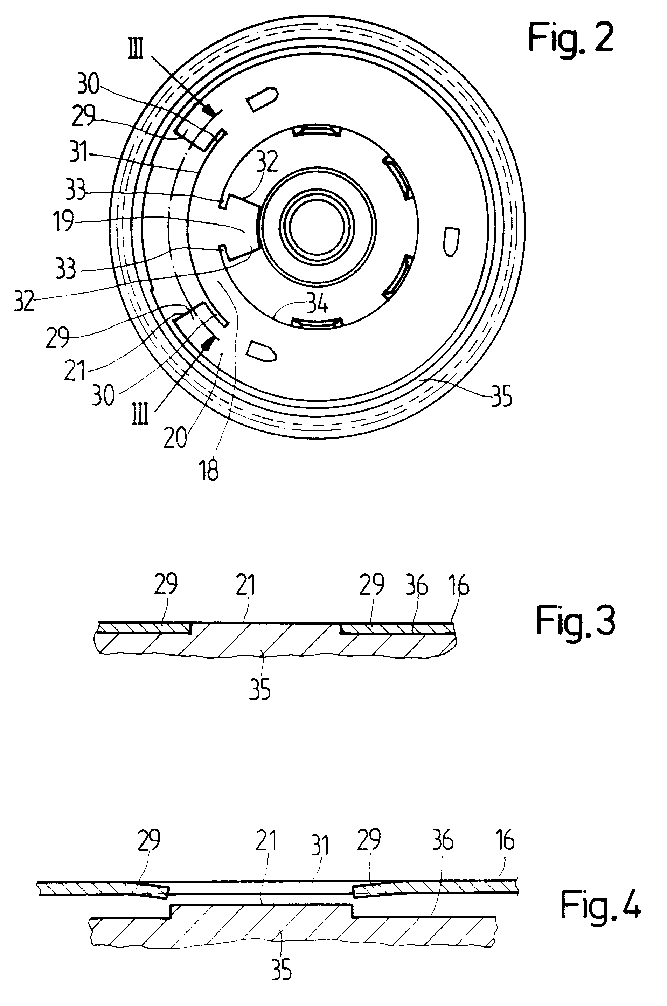

Die Freisparungen 30 bzw. 33 ermöglichen es, die Abschnitte 29 bzw. 32 bei der Herstellung der Schaltscheibe 16 leicht aus der Ebene der Schaltscheibe abzubiegen, ohne benachbartes Material mitzuverbiegen. Die Schaltscheibe 16 wird dann so auf das Schneckenrad 35 gesetzt, daß, wie dies in Figur 4 angedeutet ist, die Abschnitte 29 bzw. 32 zum Schneckenrad 35 hin geneigt sind. Der Vorspannweg, also der Versatz aus der Ebene der Schaltscheibe 16 am freien Ende, ist für die Abschnitte 32 gleich demjenigen für die Abschnitte 29, auch wenn die Aussparungen 30 und 33 verschieden lang sind. Er beträgt etwa 0,2 mm. Am Schneckenrad 35 ist eine möglichst ebene Auflagefläche 36 für die Schaltscheibe 16 ausgebildet. Über diese Auflagefläche 36 steht im Bereich der Blechlücke 21 und innerhalb des geschlossenen Rings 18 und seitlich des Ringsektors 19 Material des Schneckenrads 35 um die Stärke des Blechs, aus dem die Schaltscheibe gefertigt ist, hoch. Beim Aufsetzen der Schaltscheibe 16 auf das Schneckenrad 35 gelangen zuerst die freien Enden der Abschnitte 29 und 32 auf die Auflagefläche. Bis zum flachen Anliegen der Schaltscheibe 16 auf der Auflagefläche 36 des Schneckenrads 35 werden dann die Abschnitte 29 und 32 leicht verbogen und vorgespannt. Es ist damit sichergestellt, daß sie nicht über das über die Auflagefläche 36 hochstehende Material des Schneckenrads 35 überstehen und daß glatte Übergänge zwischen diesem Material und der Schaltscheibe vorhanden sind.

## Patentansprüche

1. Elektrischer Schalter, insbesondere Parkstellungsschalter für einen Scheibenwischermotor, mit einem Träger (35) aus Kunststoff, mit einem elektrisch leitenden Metallblech (16), das auf dem Träger (35) befestigt ist, und mit wenigstens einem Schleifkontakt (25, 27), der über das Metallblech (16) und daran anschließendes Kunststoffmaterial des Trägers (35) bewegbar ist, wobei im Übergangsbereich die von dem Schieifkontakt (25, 27) beaufschlagbare Fläche des Metallblechs (16) und die von dem Schleifkontakt (25, 27) beaufschlagbare Fläche des Trägers (35) wenigstens annähernd auf gleicher Höhe liegen,
dadurch gekennzeichnet,
daß das Metallblech (16) angrenzend an die beaufschlagbare Fläche des Trägers (35) einen Abschnitt (29, 32) aufweist, der auf den Träger (35) zu vorgespannt ist.

2. Elektrischer Schalter nach Anspruch 1, dadurch gekennzeichnet, daß der federnd vorgespannter Abschnitt (29, 32) im entspannten Zustand aus der Ebene des Metallblechs (16) abgebogen ist.

3. Elektrischer Schalter nach Anspruch 1 oder 2, dadurch gekennzeichnet, daß das Metallblech (16), quer zur Richtung der relativen Bewegung zwischen ihm und dem Schleifkontakt (25, 27) betrachtet, breiter ist als der vorgespannte Abschnitt (29, 32), und daß der vorgespannte Abschnitt (29, 32) seitlich durch eine Freisparung (30, 33) vom übrigen Metallblech (16) getrennt ist.

4. Elektrischer Schalter nach Anspruch 3, dadurch gekennzeichnet, daß das Metallblech (16) seitlich der Schleifbahn des Schleifkontakts (25, 27) über das freie Ende des vorgespannten Abschnitts (29, 32) hinausreicht und daß eine Seitenkante (31, 34) des seitlich vor dem vorgespannten Abschnitt (29, 32) befindlichen Abschnitts (18) des Metallblechs (16) in gleichmäßigem Verlauf und stufenlos bis zum Ende der Freisparung (30, 33) fortgeführt ist.

5. Elektrischer Schalter nach Anspruch 4, dadurch gekennzeichnet, daß die relative Bewegung zwischen Träger (35) und Schleifkontakt (25, 27) eine Drehbewegung ist und daß die Seitenkante (31, 34) ein Kreisbogen ist.

6. Elektrischer Schalter nach einem der Ansprüche 1 bis 5, dadurch gekennzeichnet, daß die relative Bewegung zwischen Träger (35) und Schleifkontakt (25, 27) eine Drehbewegung in eine einzige Richtung ist, daß sich in der Schleifbahn des Schleifkontakts (25, 27) eine Blechlücke (21) befindet, und daß sich beidseits der Blechlücke (21) jeweils ein vorgespannter Abschnitt (29, 32) des Metallblechs (16) befindet.

7. Elektrischer Schalter nach einem der Ansprüche 3 bis 6, dadurch gekennzeichnet, daß das Metallblech (16) eine lange Kontaktbahn (20) für einen Schleifkontakt (25) und eine kurze Kontaktbahn (19) für einen Schleifkontakt (27) aufweist, und daß ein vorgespannter Abschnitt (29) an der langen Kontaktbahn (20) länger ist, insbesondere durch eine längere Freisparung (30) vom Metallblech (16) getrennt ist, als ein vorgespannter Abschnitt (32) an der kurzen Kontaktbahn (19).

8. Elektrischer Schalter nach Anspruch 7, dadurch gekennzeichnet, daß der Vorspannweg am freien Ende eines langen vorgespannten Abschnitts (29) gleich dem Vorspannweg am freien Ende eines kurzen vorgespannten Abschnitts (32) ist.

9. Elektrischer Schalter nach einem der Ansprüche 3 bis 8, dadurch gekennzeichnet, daß das Metallblech (16) auf einem drehbaren Träger (35) befestigt ist und mit drei Schleifkontakten (25, 26, 27) zusammenwirkt, daß das Metallblech (16) mittig eine geschlossene Kontaktbahn (18) und auf einer Seite dieser geschlossenen Kontaktbahn (18) eine offene Kontaktbahn (20) mit einer Lücke (21) und auf der anderen Seite dieser geschlossenen Kontaktbahn (18) und, peripher betrachtet, innerhalb der Lücke (21) einen in peripherer Richtung kurzen Sektor (19) als offene Kontaktbahn besitzt, und daß die beiden offenen Kontaktbahnen (19, 20) an jedem Ende einen durch eine Freisparung (30, 33) von der geschlossenen Kontaktbahn (18) getrennten vorgespannten Abschnitt (29, 32) aufweisen.

10. Elektrischer Schalter nach einem vorhergehenden Anspruch, dadurch gekennzeichnet, daß der Vorspannweg am freien Ende eines vorgespannten Abschnitts (29, 32) etwa 0,2 mm beträgt.

11. Scheibenwischermotor mit einem elektrischen Schalter (13) nach einem der Ansprüche 1 bis 10.

## Claims

1. Electric switch, more particularly a parking position switch for a windscreen wiper motor, including a plastic carrier (35), an electrically conductive metal sheet (16) which is secured to the carrier (35), and at least one sliding contact (25, 27) which is movable over the metal sheet (16) and subsequent plastic material of the carrier (35), the surface of the metal sheet (16), adapted to be acted upon by the sliding contact (25, 27), and the surface of the carrier (35), adapted to be acted upon by the sliding contact (25, 27), being level with each other in the transition range at least approximately,
**characterized** in that, adjacent to the applicable surface of the carrier (35), the metal sheet (16) includes a portion (29, 32) which is biassed in the direction of the carrier (35).

2. Electric switch as claimed in claim 1,
**characterized** in that the resiliently biassed portion (29, 32) is deflected from the plane of the metal sheet (16) in the unbiassed condition.

3. Electric switch as claimed in claim 1 or claim 2,
**characterized** in that the metal sheet (16), when viewed transversely to the direction of the relative movement between the metal sheet and the sliding contact (25, 27), is wider than the biassed portion (29, 32), and in that the biassed portion (29, 32) is isolated from the remaining metal sheet (16) by a cutout (30, 33).

4. Electric switch as claimed in claim 3,
**characterized** in that the metal sheet (16) extends beyond the free end of the biassed portion (29, 32) laterally of the sliding path of the sliding contact (25, 27), and in that a lateral edge (31, 34) of the portion (18) of the metal sheet (16), disposed laterally in front of the biassed portion (29, 32) extends further in an even course and steplessly until the end of the cutout (30, 33).

5. Electric switch as claimed in claim 4,
**characterized** in that the relative movement between carrier (35) and sliding contact (25, 27) is a rotation, and in that the lateral edge (31, 34) is an arc of a circle.

6. Electric switch as claimed in any one of the claims 1 to 5,
**characterized** in that the relative movement between carrier (35) and sliding contact (25, 27) is a rotation in one single direction, in that a gap (21) in the sheet is disposed in the sliding path of the sliding contact (25, 27), and in that each one biassed portion (29, 32) of the metal sheet (16) is placed on either side of the gap (21) in the sheet.

7. Electric switch as claimed in any one of the claims 3 to 6,
**characterized** in that the metal sheet (16) has a long contact path (20) for a sliding contact (25) and a short contact path (19) for a sliding contact (27), and in that a biassed portion (29) at the long contact path (20) is longer, in particular is isolated from the metal sheet (16) by a longer cutout (30), as compared to a biassed portion (32) at the short contact path (19).

8. Electric switch as claimed in claim 7,
**characterized** in that the biassing travel at the free end of a long biassed portion (29) is equal to the biassing travel at the free end of a short biassed portion (32).

9. Electric switch as claimed in any one of the claims 3 to 8,
**characterized** in that the metal sheet (16) is secured to a rotatable carrier (35) and interacts with three sliding contacts (25, 26, 27), in that the metal sheet (16) is furnished with a closed contact path (18) centrically and comprises an open contact path (20) with a gap (21) on one side of the closed contact path (18), while, on the other side of the closed contact path (18) and, viewed peripherally, within the gap (21), it comprises a sector (19), short in peripheral direction, as an open contact path, and in that the two open contact paths (19, 20) at each end have a biassed portion (29, 32) which is isolated from the closed contact path (18) by a cutout (30, 33).

10. Electric switch as claimed in any one of the preceding claims,
**characterized** in that the biassing travel at the free end of a biassed portion (29, 32) amounts to 0.2 mm approximately.

11. Windscreen wiper motor including an electric switch (13) as claimed in any one of the claims 1 to 10.

## Revendications

1. Interrupteur électrique, notamment interrupteur de position d'arrêt pour un moteur d'essuie-glace, comportant un support en matière plastique (35), une tôle métallique électriquement conductrice (16), qui est fixée au support (35), et au moins un contact glissant (25,27), qui peut être déplacé au-dessus de la tôle métallique (16) et sur la matière plastique, qui s'y raccorde, du support (35), et dans lequel dans la zone de jonction, la surface de la tôle métallique (16), qui peut être chargée par le contact glissant (25,27), et la surface du support (35), qui peut être chargée par le contact glissant (25,27), sont situées au moins approximativement à la même hauteur, caractérisé en ce
que la tôle métallique (16) possède, dans une position adjacente à la surface pouvant être chargée du support (35), une section (29,32) qui est précontrainte contre le support (35).

2. Interrupteur électrique selon la revendication 1, caractérisé en ce qu'à l'état détendu, la section précontrainte élastiquement (29,32) est recourbée à partir du plan de la tôle métallique (16).

3. Interrupteur électrique selon la revendication 1 ou 2, caractérisé en ce que la tôle métallique (16) est plus large que la section précontrainte (29, 32), lorsqu'on regarde transversalement par rapport à la direction du déplacement relatif entre elle-même et le contact glissant (25,27), et la section précontrainte (29,32) est séparée latéralement du reste de la tôle métallique (16) par un évidement (30,33).

4. Interrupteur électrique selon la revendication 3, caractérisé en ce que la tôle métallique (16) s'étend, latéralement par rapport à la piste de glissement du contact glissant (25,27), au-delà de l'extrémité libre de la section précontrainte (29,32) et qu'un bord latéral (31,34) de la section (18) de la tôle métallique (16), qui est disposée latéralement en avant de la section précontrainte (29,32), se prolonge avec une configuration uniforme et sans partie étagée jusqu'à l'extrémité de l'évidement (30,33).

5. Interrupteur électrique selon la revendication 4, caractérisé en ce que le déplacement relatif entre le support (35) et le contact glissant (25,27) est un mouvement de rotation et que le bord latéral (31,34) est un arc de cercle.

6. Interrupteur électrique selon l'une des revendications 1 à 5, caractérisé en ce que le déplacement relatif entre le support (35) et le contact glissant (25,27) est un mouvement de rotation dans un seul sens, une interruption (21) de la tôle est présente dans la piste de glissement du contact glissant (25,27) et respectivement une section précontrainte (29,32) de la tôle métallique (16) est située des deux côtés de l'interruption (21) de la tôle.

7. Interrupteur électrique selon l'une des revendications 3 à 6, caractérisé en ce que la tôle métallique (16) possède une longue piste de contact (20) pour un contact glissant (25) et une courte piste de contact (19) pour un contact glissant (27), et en ce qu'une section précontrainte (29) sur la longue piste de contact (20) est plus longue, et notamment est séparée de la tôle métallique (16) par un évidement (30) plus long qu'une section précontrainte (32) située sur la courte piste de contact (19).

8. Interrupteur électrique selon la revendication 7, caractérisé en ce que la distance de précontrainte sur l'extrémité libre d'une longue section précontrainte (29) est égale à la distance de précontrainte sur l'extrémité libre d'une courte section précontrainte (32).

9. Interrupteur électrique selon l'une des revendications 3 à 8, caractérisé en ce que la tôle métallique (16) est fixée sur un support rotatif (35) et coopère avec trois contacts glissants (25,26,27), la tôle métallique (16) possède, dans la position médiane, une piste de contact fermée (18) et, d'un côté de cette piste de contact fermée (18), une piste de contact ouverte (20) comportant une interruption (21), et de l'autre côté de cette piste de contact fermée (18) et, lorsqu'on regarde dans la direction périphérique, à l'intérieur de l'interruption (21), un secteur (19), qui est court dans la direction périphérique, en tant que piste de contact ouverte, et les deux pistes de contact ouvertes (19,20) possèdent à chaque extrémité une section précontrainte (29,32), qui est séparée de la piste de contact fermée (18) par un évidement (30,33).

10. Interrupteur électrique selon l'une des revendications précédentes, caractérisé en ce que la distance de précontrainte sur l'extrémité libre d'une section précontrainte (29,32) est égale à environ 0,2 mm.

11. Moteur d'essuie-glace comportant un interrupteur électrique (13) selon l'une des revendications 1 à 6.
